# EUROPÄISCHE PATENTSCHRIFT

(11) **EP 0 856 925 B1**
(45) Veröffentlichungstag und Bekanntmachung des Hinweises auf die Patenterteilung: **13.02.2008**
(21) Anmeldenummer: 97121281.6
(22) Anmeldetag: 04.12.1997
(51) Int. Cl.: H02B 13/035, H01F 27/40, H02B 11/26

(54) **Spannungswandler**
Voltage transformer
Convertisseur de tension

(30) Priorität: 28.01.1997 DE 19702875
(43) Veröffentlichungstag der Anmeldung: 05.08.1998
(73) Patentinhaber: AREVA Sachsenwerk GmbH, 93055 Regensburg (DE)
(72) Erfinder: Reichl, Erwin, Dipl.-Ing., 93105 Tegernheim (DE)
(74) Vertreter: Dreiss, Fuhlendorf, Steimle & Becker

(56) Entgegenhaltungen:
- EP-A- 0 716 488
- DE-A- 3 430 776
- DE-A- 4 233 986
- DE-A- 19 724 553
- DE-B- 1 019 732
- DE-U- 1 700 520
- DE-U- 7 400 493

## Beschreibung

Die Erfindung betrifft einen Spannungswandler gemäß dem Oberbegriff des ersten Anspruchs.

Ein bekannter Spannungswandler dieser Art (DE 42 33 986 A1) weist eine Metallkapselung auf, die eine von elektrischem Isoliermaterial umschlossene elektrische Wandlerwicklung aufnimmt. Ein hochspannungsseitiger Anschluß der Wandlerwicklung ist mit einem nach außen geführten Anschlußteil versehen, das mit einem Gegensteckteil im Betriebszustand in Steckverbindung steht. Das Gegensteckteil ist dabei innerhalb einer gasisolierten Schaltanlage angeordnet und steht dort über einen Trennschalter mit einem Sammelschienensystem der für Mittelspannung ausgelegten Schaltanlage in trennbarer elektrischer Verbindung, so daß der Spannungswandler im Bedarfsfall ohne eine Abschaltung der Schaltanlage allein durch öffnen des zugeordneten Schalters spannungslos geschaltet und danach mittels der Steckverbindung von der Schaltanlage mechanisch getrennt werden kann. Von Nachteil ist dennoch, daß bei einem primär- oder sekundärseitigen Kurzschluß im Spannungswandlerstromkreis Schutzeinrichtungen ansprechen, die der Schaltanlage zugeordnet sind und in einem solchen Störungsfall die Schaltanlage als Ganzes abschalten.

Der Erfindung liegt die Aufgabe zugrunde, bei einem Spannungswandler gemäß dem Oberbegriff des 1. Anspruchs Maßnahmen zu treffen, die eine Eigensicherheit im Störungsfall herbeiführen.

Die Lösung dieser Aufgabe erfolgt bei einem gattungsgemäßen metallgekapselten Spannungswandler gemäß der Erfindung durch die kennzeichnenden Merkmale des ersten Anspruchs. Bevorzugte Ausgestaltungen der Erfindung sind in den abhängigen Ansprüchen definiert.

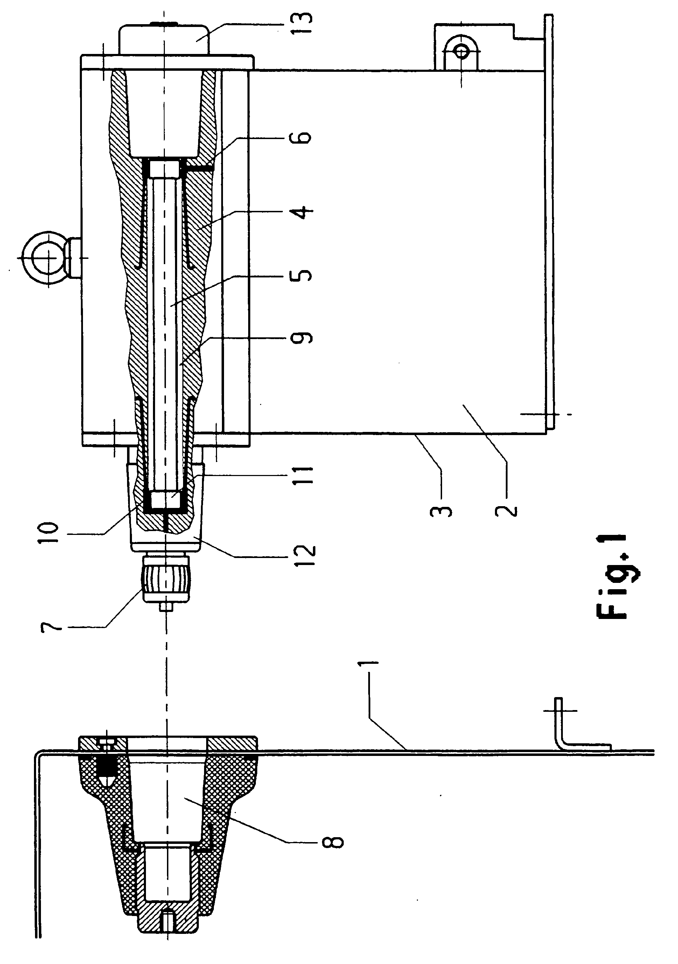

Eine in den Primärstromkreis des Spannungswandlers eingeschaltete elektrische Sicherung, vorzugsweise eine Schmelzsicherung, sorgt für ein separates Abschalten des Spannungswandlers im Störungsfall. Da der Auslösestrom der Sicherung nur wenige Amperes beträgt, werden übergeordnete, der Schaltanlage zugeordnete Schutzeinrichtungen nicht zum Ansprechen gebracht. Bei einem Störungsfall im Stromkreis des Spannungswandlers bleibt dadurch die Schaltanlage als solche unbeeinflußt und der Spannungswandler kann nach Öffnen der anlagenseitig vorgesehenen Trenneinrichtung abgesteckt werden. Es ist dann eine Überprüfung des Spannungswandlers möglich und im Falle, daß die die Sicherung auslösende Störung durch die äußere Beschaltung des Spannungswandlers herbeigeführt wurde, die Funktionsfähigkeit des Spannungswandlers durch Ersetzen der Sicherung in einfacher Weise wiederherstellbar.Weist der Wandler selbst keine Beschädigung auf und ist seine Abtrennung vom Hochspannungskreis sowie seine primärseitige Erdung sichergestellt, so kann die Sicherung bei einer Ausführung des Wandlers gemäß Fig.1 auch im angebauten Zustand des Wandlers gewechselt werden.

Für einen kompakten Aufbau des Spannungswandlers ist die Sicherung in einer rohrförmigen Ausnehmung vorgesehen, welche in das für die Isolierung der Wandlerwicklungen erforderliche Isoliermaterial, insbesondere Gießharz, eingeformt ist. Dabei weist diese Ausnehmung insbesondere eine nach außen führende Zugrifföffnung auf, durch welche hindurch die Sicherung handhabbar ist. Diese Zugrifföffnung wird aus Gründen des Personenschutzes und einer geringen Baulänge elektrisch dicht mittels eines Abschlußteils verschlossen, was gleichzeitig die vollständige Metallkapselung des Spannungswandlers herstellt.

Die Sicherung ist einendig möglichst nahe am von außen zugänglichen Anschlußteil angeordnet und mit demselben elektrisch verbunden, während ihr anderes Ende mit einem Wicklungsende der Hochspannungsspule der Wandlerwicklung verbunden ist. In der Ausnehmung befinden sich mit axialem Abstand voneinander Kontaktstücke für angepaßte Gegenkontaktstücke der Sicherung, wobei die Kontaktstücke und die Gegenkontaktstücke jeweils in lösbarer Kontaktanlage, insbesonderen in reibschlüssiger Kontaktanlage stehen, so daß das Austauschen ohne besondere Hilfsmittel ausgeführt werden kann. Insbesondere liegt die Ausnehmung achsengleich mit einem konusförmischen Anschlußteil, mit dem der Spannungswandler an die Schaltanlage anzustecken ist. Die Sicherung kann dadurch einendig unmittelbar mit dem Kontaktstück des Anschlußteils elektrisch und mechanisch verbunden werden , und es kann für die Unterbringung der Sicherung die Gehäusetiefe in Achsrichtung des Anschlußteils genutzt werden.

Wenn das Anschlußteil als ein über die Außenkontur der metallischen Wandlerkapselung hinausragendes Steckerteil ausgebildet wird, dann kann die Ausnehmung sich in axialer Richtung in einen kegelstumpfförmig sich verjüngenden Steckkonus des Steckerteils erstrecken. Dadurch wird eine Teillänge des Steckerteils für die Unterbringung der Sicherung ausgenutzt, nachdem der sich zum freien Ende hin kegelstumpfförmig verjüngende Steckkonus ebenfalls aus Isoliermaterial besteht und nur an seinem freien Ende elektrische Steckkontaktteile trägt, die die elektrische Verbindung mit schaltanlagenseitigen Steckkontaktteilen herstellen. Die Anschlußteile besitzen dabei vorzugsweise Schnittstellen mit nach DIN genormten Abmessungen.Dabei kann das Anschlußteil über seine gesamte axiale Länge durchbrochen sein, so daß eine entsprechende Verlängerung der Ausnehmung für die Sicherung gebildet ist. Die Sicherung kann dann durch dieses Anschlußteil hindurch in die ihr zugeordnete Ausnehmung eingeführt und daraus herausgenommen werden. Es ist jedoch auch möglich, an dem dem Steckerteil zugewandten Ende der Ausnehmung eine nach außen offene, sich insbesondere konusförmig erweiternde Konusbuchse vorzusehen, in welche ein angepaßter Kabelblindstecker elektrisch dicht und lösbar eingesetzt wird. In diesem Falle läßt sich die Sicherung durch Entfernen des Kabelblindsteckers austauschen, der nach Wiederaufstecken die vollständige Metallkapselung wiederherstellt.

Es ist jedoch auch möglich, das Anschlußteil als eine in die Außenkontur der Wandlerkapselung eingesenkte Innenkonusbuchse auszubilden, an deren Grund sich eine metallische Steckbuchse anschließt. Dabei kann die Steckbuchse ebenfalls über eine Teillänge für den Eingriff der Sicherung ausgebildet sein, während der andere Teil für die elektrische Kontaktierung eines eingesteckten Steckerteils dient. Hierbei kann die Steckbuchse wieder entsprechend dem Durchmesser der Sicherung ausgebildet sein, so daß die Sicherung durch diese Steckbuchse und die vorgelagerte Innenkonusbuchse gehandhabt werden kann. Es ist jedoch auch möglich, in axialer Verlängerung der Ausnehmung auf der der Innenkonusbuchse abgewandten Seite an das Insoliermaterial ein axial durchbrochenes Konusstück-z.B. ein Außenkonusteil- einstückig anzuformen, durch das hindurch die Handhabung der Sicherung von außen her ermöglicht wird. Der elektrische dichte Abschluß mit einem angepaßten Abdeckteil ist auch hier vorzusehen.

Mit den in der Ausnehmung festgesetzten Kontaktstücken werden insbesondere Feldsteuerelektroden angesetzt, deren freie Enden aufeinander zuweisen und die in das Isoliermaterial eingebettet sind. Es wird dadurch der Bildung von Glimmentladungen entgegengewirkt. Im übrigen kann es auch zweckmäßig sein, axial zwischen eines der Kontaktstücke und das benachbarte Gegenkontaktstück der Sicherung ein elektrisch leitendes Druckfederelement einzufügen, um eine dauerhafte elektrisch einwandfreie Kontaktverbindung sicherzustellen. Wenn ferner die Sicherung in das Isoliermaterial eingegossen wird, wird sie vorzugsweise über ihre Länge in ein Isolierrohr eingesetzt und vor dem Umgießen mit partiellen Polsterungen zum Beispiel an den Endelektroden versehen, um sie gegen mechanische Beanspruchung bei der Schrumpfung des Gießharzes zu schützen. Daneben ist es möglich, die Aufnehmung für die Sicherung dort vorzusehen, wo aus baulichen Gründen ohnehin größere Anhäufungen von Gießharz auftreten. Dabei können die Ausnehmungen leicht konisch ausgebildet werden, um einen entsprechenden Formkern nach dem Aushärten des Isoliermaterials problemlos herausziehen zu können.

Die Erfindung ist nachfolgend anhand der Skizzen eines Ausführungsbeispiels näher erläutert.

Es zeigen:
- Fig. 1: einen Spannungswandler mit integrierter Sicherung und überstehendem Steckerteil in teilweise aufgebrochener Darstellung,
- Fig. 2: einen Spannungswandler gemäß Fig. 1 mit verändertem Aufbau im Bereich des Steckerteils und
- Fig. 3: eine Teildarstellung eines Spannungswandlers mit einem als Innenkonusbuchse ausgebildeten Anschlußteil und damit gekuppelter Sicherung.

Ein für die Verwendung in Verbindung mit einer metallgekapselten, vorzugsweise gasisolierten Mittelspannungsschaltanlage 1 ausgebildeter Spannungswandler 2 umschließt mit einer metallischen Wandlerkapselung 3 eine in Isoliermaterial 4 eingebettete Wandlerwicklung mit einer für den Anschluß an Mittelspannung geeigneten Pimärspule und einer sekundärseitigen, für die Beaufschlagung von Meß- und/oder Steuereinrichtungen bemessenen Primärspule. Innerhalb des Isoliermaterials 4 befindet sich eine elektrische Sicherung 5, welche einerseits mit einem Wicklungsende 6 der Hochspannungsspule der Wandlerwicklung und andererseits mit einem die Außenkontur der metallischen Wandlerkapselung 3 überragenden, gegenüber der Kapselung 3 elektrisch isoliert gehaltenen Anschlußteil 7 elektrisch leitend verbunden ist. In der Wandung der gasdicht gekapselten Schaltanlage 1 befindet sich ein handelsübliches Geräteanschlußteil 8, vorliegend mit Innenkonus, in welche das Anschlußteil 7 des Spannungswandlers für die elektrische Verbindung mit Mittelspannung führenden Bauteilen der Mittelspannungsschaltanlage 1 einzustecken ist.

In das Isoliermaterial 4 ist eine rohrförmige Ausnehmung 9 eingeformt, deren Durchmesser oder Querschnitt größer als der der Sicherung 5 ist. Die Ausnehmung 9 weist eine nach außen führende Zugrifföffnung auf, durch welche hindurch die Sicherung aus der Ausnehmung 9 herausgezogen bzw. eingesetzt werden kann. In der Ausnehmung 9 befinden sich mit axialem Abstand voneinander Kontaktstücke 10, welche mit endseitigen, an der Sicherung 5 vorgesehenen Gegenkontaktstücken 11 in reibschlüssiger, lösbarer Kontaktanlage stehen. Das dem von außen zugänglichen Anschlußteil 7 benachbarte Kontaktstück 10 ist dabei mit letzterem elektrisch leitend verbunden, während das gegenüberliegende Gegenkontaktstück 11 über das benachbarte Kontaktstück 10 mit dem Wicklungsende 6 der Hochspannungsspule in leitender Verbindung steht.

Das Anschlußteil 7 weist gemäß Fig. 1 einen über die Außenkontur der metallischen Wandlerkapselung 3 hinausragendes und sich zum freien Ende hin kegelstumpfförmig verjüngenden Steckkonus 12 auf, der für den elektrisch dichten Eingriff in das Geräteanschlußteil 8 ausgebildet ist. Der elastische Teil des Steckkonus 12 sitzt dabei auf einem aus Isolierstoff bestehendem Tragekörper, der vorzugsweise einstückig mit dem Isoliermaterial 4 verbunden ist bzw. daraus ausgeformt ist. Dadurch kann sich die Ausnehmung 9 in den Steckkonus erstrecken, so daß die in der axialen Länge vorgegebene Sicherung über eine Teillänge im Anschlußteil 7 untergebracht ist. Hierbei ist die Zugrifföffnung zur Ausnehmung 9 als eine nach außen offene, sich ebenfalls konusförmig erweiternde Konusbuchse ausgebildet, in welche ein angepaßter Kabelblindstecker 13 elektrisch dicht und lösbar eingesetzt ist, so daß Hochspannungsüberschläge von der Sicherung zur Wandlerkapselung 3 ausgeschlossen sind. Dabei stellt der vorzugsweise handelsüblich ausgebildete Kabelblindstecker 13 gleichzeitig die vollständige Metallkapselung des Spannungswandlers 2 her.

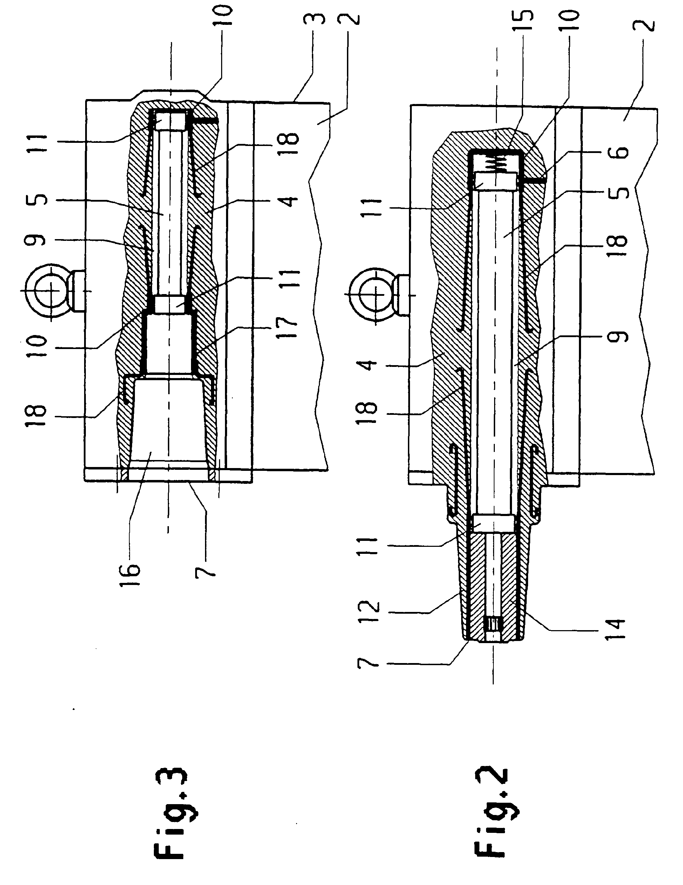

Gemäß Fig. 2 ist die Zugrifföffnung zur Ausnehmung 9 als axialer Durchbruch durch das nach außen überstehende Anschlußteil 7 ausgebildet. Dabei liegt auch hier wie bei der Ausführungsform nach Fig. 1 die Ausnehmung 9 und damit die Sicherung 5 achsengleich mit dem Anschlußteil 7. Es ist dann kein gesonderter Kabelblindstecker zum Abschluß einer entsprechenden Zugrifföffnung erforderlich, jedoch muß in diesem Falle im Gegensatz zur Ausführung nach Fig. 1 der Spannungswandler 2 von der Schaltanlage 1 gelöst werden, wenn die Sicherung 5 überprüft oder ausgetauscht werden soll. Das Anschlußstück 7 enthält dabei innerhalb seines aus dem Isoliermaterial 4 ausgeformten Steckkonus 12 eine elektrische Anschlußbuchse 14, welche in elektrischem Kontakt mit einem als Steckerteil ausgebildeten Geräteanschluß der Schaltanlage 1 oder in einem Kabelsteckteil vorgesehenen angepaßten Kontaktstift tritt, wenn dieser Wandler direkt oder über ein Kabel mit der Schaltanlage 1 verbunden wird. Die Kontaktbuchse 14 kann dabei gleichzeitig als Anschlag für die Sicherung 5 dienen, deren gegenüberliegendes Gegenkontaktstück über eine vorzugsweise elektrisch leitende Druckfeder 15 am zugehörigen Kontaktstück 10 abgestützt ist. Die Sicherung 5 wird dadurch dauerhaft in Kontaktanlage mit der Kontaktbuchse 14 gehalten.

Daneben ist es auch möglich, das Anschlußteil 7 mit einer in die Außenkontur der metallischen Wandlerkapselung 3 eingesenkten Innenkonusbuchse 16 auszustatten, an deren Grund sich eine in Achsrichtung erstreckende metallische Steckbuchse 17 anschließt. Die Steckbuchse 17 bildet einen Gegenkontakt für einen dann als Steckerteil ausgebildeten Geräteanschlußteil an der Schaltanlage 1 oder den Stecker eines Kabelstückes.In der axialen Verlängerung dieses Geräteanschlußteils 7 liegt wieder die Ausnehmung 9 für die Sicherung 5, wobei in der Steckbuchse 17 ein Kontaktstück 10 für das Gegenkontaktstück 11 der Sicherung 5 ausgebildet ist, die anderenends mit dem dort vorgesehenen Gegenkontaktstück 11 in das zugehörige Kontaktstück 10 reibschlüssig eingreift. Wenn hierbei der Zugriff zur Sicherung nicht durch das Anschlußteil 7 bzw. die Steckbuchse 17 erfolgen soll, weil der Tausch dieser Sicherung 5 doch bei an die Schaltanlage angestecktem Spannungswandler 2 möglich sein soll, dann kann auf der der Innenkonusbuchse 16 abgewandten Seite das Isoliermaterial 4 als axial durchbrochenes Konusstück über die Außenkontur der Wandlerkapselung 3 hinaus ausgeformt werden, so daß durch diese Ausformung hindurch die Sicherung 5 zugänglich wird. Dabei kann die Ausformung mit Außenkonus oder Innenkonus ausgebildet sein, so daß mit einer angepaßten Abdeckung wieder ein elektrisch dichter Abschluß der Zugrifföffnung zur Ausnehmung 9 möglich wird. Das benachbarte Kontaktstück 10 ist in diesem Fall wie bei der Ausführungsform nach Fig. 1 wieder axial beidendig offen zu gestalten, um die Sicherung 5 einschieben und herausziehen zu können.

## Patentansprüche

1. Metallgekapselter Spannungswandler (2) für Mittelspannung, mit einer metallischen Wandlerkapselung (3), mit einem von außen zugänglichen elektrischen Anschlussteil (7), und
mit einer elektrischen Wandlerwicklung, wobei die wandlerwicklung in elektrischem Isoliermaterial (4) eingebettet und von der metallischen Wandlerkapselung (3) umschlossen ist,
**dadurch gekennzeichnet,**
**dass** eine im Isoliermaterial (4) enthaltene rohrförmige Ausnehmung (9) vorgesehen ist, die eine nach außen führende Zugrifföffnung aufweist,
wobei die Ausnehmung (9) zur Aufnahme einer elektrischen Sicherung (5) vorgesehen ist, und wobei die Zugrifföffnung entweder mittels eines die vollständige Metallkapselung des Spannungswandlers (2) herstellenden, elektrisch dichten Abschlussteils verschlossen ist oder als Durchbruch durch das Anschlussteil (7) ausgebildet ist.

2. Spannungswandler (2) nach Anspruch 1, wobei als Abschlussteil ein Kabelblindstecker (13) vorgesehen ist, der zum Einsetzen der Sicherung (5) entfernbar ist.

3. Spannungswandler (2) nach Anspruch 1, wobei das Anschlussteil (7) eine elektrische Anschlussbuchse (14) enthält, die zum Einsetzen der Sicherung (5) entfernbar ist.

4. Spannungswandler nach Anspruch 1 oder einem der folgenden,
**dadurch gekennzeichnet,**
**daß** die Sicherung (5) einendig mit dem von außen zugänglichen Anschlußteil (7) und anderernends mit einem Wicklungsende (6) einer Hochspannunsspule der Wandlerwicklung verbunden ist.

5. Spannungswandler nach Anspruch 1 oder einem der folgenden,
**dadurch gekennzeichnet,**
**daß** in der Ausnehmung (9) mit axialem Abstand voneinander Kontaktstücke (10) vorgesehen sind, welche mit angepaßten Gegenkontaktstücken (11) der Sicherung (5) in lösbarer Kontaktanlage stehen.

6. Spannungswandler nach Anspruch 1 oder einem der folgenden,
**dadurch gekennzeichnet,**
**daß** die Ausnehmung (9) achsengleich mit einem konusformigen Anschlußteil (7) angeordnet ist.

7. Spannungswandler nach Anspruch 6,
**dadurch gekennzeichnet,**
**daß** das Anschlußteil (7) ein über die Außenkontur der metallischen Wandlerkapselung (3) hinausragendes Steckerteil mit einem zum freien Ende hin kegelstumpfförmig sich verjüngenden Steckkonus (12) ist und daß sich die Ausnehmung (9) einendig in den Steckkonus (12) erstreckt.

8. Spannungswandler nach Anspruch 7,
**dadurch gekennzeichnet,**
**daß** dem dem Steckerteil (7) abgewandten Ende der Ausnehmung (9) eine nach außen offene, sich konusförmig erweiternde Konusbuchse vorgeordnet ist, in welche ein angepaßter Kabelblindstecker (13) elektrisch dicht eingesetzt ist.

9. Spannungswandler nach Anspruch 6 oder einem der folgenden,
**dadurch gekennzeichnet,**
**daß** die Ausnehmung (9) axial durch das Anschlußteil (7) hindurch nach außen verlängert ist.

10. Spannungswandler nach Anspruch 6 oder 9,
**dadurch gekennzeichnet,**
**daß** das Anschlußteil (7) eine in die Außenkontur der metallischen Wandlerkapselung (3) eingesenkte Innenkonusbuchse (16) und eine sich an deren Grund anschließende metallische Steckbuchse (17) aufweist und daß in die Steckbuchse (17) die Sicherung (5) einendig eingreift.

11. Spannungswandler nach Anspruch 10,
**dadurch gekennzeichnet,**
**daß** in axialer Verlängerung der Ausnehmung auf der der Innenkonusbuchse (16) abgewandten Seite an das Isoliermaterial ein axial durchbrochenes Konusstück angeformt ist, das elektrisch dicht mit einem angepaßten Abdeckteil abgeschlossen ist.

12. Spannungswandler nach Anspruch 5 oder einem der folgenden
**dadurch gekennzeichnet,**
**daß** an die Kontaktstücke (10) Feldsteuerelektroden (18) angesetzt sind, deren freie Enden aufeinander zuweisen und die in das Isoliermaterial (4) eingebettet sind.

13. Spannungswandler nach Anspruch 5 oder einem der folgenden
**dadurch gekennzeichnet,**
**daß** axial zwischen ein Kontaktstück (10) und das benachbarte Gegenkontaktstück (11) ein elektrisch leitendes Druckfederelement (15) eingesetzt ist.

14. Spannungswandler nach Anspruch 1,
**dadurch gekennzeichnet,**
**daß** die Sicherung (5) in ein über ihre axiale Länge reichendes Schutzrohr eingesetzt ist und daß die Kontaktstücke der Sicherung elektrisch leitend mit der Hochspannungsspule bzw. dem Anschlußteil verbunden sind.

15. Spannungswandler nach Anspruch 14,
**dadurch gekennzeichnet,**
**daß** die so gebildete Anordnung unmittelbar in das Isoliermaterial angegossen ist.

16. Spannungswandler nach Anspruch 14oder 15,
**dadurch gekennzeichnet,**
**daß** zwischen das Isolierrohr und das Isoliermaterial elastische Polsterstücke eingefügt sind.

## Claims

1. A metal-encapsulated voltage transformer (2) for medium voltage, having a metallic transformer encapsulation (3), having an electrical connecting element (7) accessible from the exterior, and
having an electrical transformer coil, wherein the transformer coil is embedded in an electrically insulating material (4) and is enclosed by the metallic transformer encapsulation (3),
**characterized in that**
a tube-shaped recess (9) contained in the insulating material (4) is provided, which has an access opening leading to the exterior,
wherein the recess (9) is provided for receiving an electrical safety fuse (5), and wherein the access opening is either closed by means of an electrically insulated closure element, which establishes the complete metallic encapsulation of the voltage transformer (2), or is embodied as an open-worked connecting element (7).

2. The voltage transformer (2) in accordance with claim 1,
wherein a dummy cable plug (13) is provided, which can be removed for inserting the safety fuse (5).

3. The voltage transformer (2) in accordance with claim 1,
wherein the connecting element (7) contains an electrical connecting socket (14), which can be removed for inserting the safety fuse (5).

4. The voltage transformer (2) in accordance with claim 1 or one of the following,
**characterized in that**
at one end the safety fuse (5) is connected with the connecting element, which is accessible from the exterior, and at the other end with a coil end (6) of a high voltage coil of the transformer coil.

5. The voltage transformer (2) in accordance with claim 1 or one of the following,
**characterized in that**
contact elements (10) are provided in the recess (9) at an axial distance from each other, which are in releasable contact with matched counter-contact elements (11) of the safety fuse (5).

6. The voltage transformer (2) in accordance with claim 1, or one of the following,
**characterized in that**
the recess (9) is arranged equi-axially with a cone-shaped connecting element (7).

7. The voltage transformer (2) in accordance with claim 6,
**characterized in that**
the connecting element (7) is a plug element projecting past the outer contour of the metallic transformer encapsulation (3) and has a plug-in cone (12), which tapers in the shape of a truncated cone, and that the recess (9) extends into one end of the plug-in cone (12).

8. The voltage transformer (2) in accordance with claim 7,
**characterized in that**
a conically widening conical socket, which is open to the exterior, is arranged upstream of the end of the recess (9) facing away from the plug-in element (7), into which a matched dummy cable plug (13) has been inserted in an electrically insulated manner.

9. The voltage transformer (2) in accordance with claim 6 or one of the following,
**characterized in that**
the recess (9) is axially extended through the connecting element (7) to the exterior.

10. The voltage transformer (2) in accordance with claim 6 or 9,
**characterized in that**
the connecting element (7) has an inner cone socket (16) sunk into the outer contour of the metallic transformer encapsulation (3) and a metallic plug-in socket (17) connected to its bottom, and that the safety fuse (5) enters into one end of the plug-in socket (17).

11. The voltage transformer (2) in accordance with claim 10,
**characterized in that**
an axial, open-worked cone element has been formed on the insulating material in the axial extension of the recess on the side facing away from the inner cone socket (16), and is closed off in an electrically insulated manner by means of a matched cover element.

12. The voltage transformer (2) in accordance with claim 5 or one of the following,
**characterized in that**
field control electrodes (18), whose free ends point toward each other and which have been embedded into the insulating material (4), have been placed on the contact elements (10).

13. The voltage transformer (2) in accordance with claim 5 or one of the following,
**characterized in that**
an electrically conducting contact spring element (15) has been inserted between a contact element (10) and the adjoining counter-contact element (11).

14. The voltage transformer (2) in accordance with claim 1,
**characterized in that**
the safety fuse (5) has been inserted into a protective tube extending over its length, and that the contact elements of the safety fuse are connected in an electrically conducting manner with the high voltage coil or the connecting element.

15. The voltage transformer (2) in accordance with claim 14,
**characterized in that**
the arrangement constituted in this way is directly cast into the insulating material.

16. The voltage transformer (2) in accordance with claim 14 or 15,
**characterized in that**
elastic buffer elements have been inserted between the insulating tube and the insulating material.

## Revendications

1. Transformateur de tension (2) doté d'un blindage métallique, destiné à la moyenne tension, comportant un blindage de transformateur (3) métallique,
un élément de connexion électrique (7) accessible de l'extérieur, et
un bobinage de transformateur électrique, moyennant quoi le bobinage de transformateur est noyé dans un matériau isolant (4) électrique et entouré par le blindage de transformateur (3) métallique,
**caractérisé en ce qu'**un évidement (9) tubulaire contenu dans le matériau isolant (4) est prévu, lequel présente une ouverture d'accès débouchant vers l'extérieur, moyennant quoi l'évidement (9) est prévu afin de recevoir un fusible (5) électrique, et moyennant quoi l'ouverture d'accès est soit scellée à l'aide d'un élément obturateur étanche d'un point de vue électrique, constituant le blindage métallique complet du transformateur de tension (2), soit sous la forme d'un ajour au travers de l'élément de connexion (7).

2. Transformateur de tension (2) selon la revendication 1, moyennant quoi, comme élément obturateur, on prévoit une fiche isolante de câble (13), qui peut être retirée afin d'insérer le fusible (5).

3. Transformateur de tension (2) selon la revendication 1, dans lequel l'élément de connexion (7) contient une douille de connexion (14) électrique, qui peut être retirée afin d'insérer le fusible (5).

4. Transformateur de tension selon la revendication 1 ou l'une quelconque des revendications suivantes,
**caractérisé en ce que** le fusible (5) est relié, au niveau d'une extrémité, à l'élément de connexion (7) accessible de l'extérieur et, au niveau de l'autre extrémité, à une extrémité de bobinage (6) d'une bobine haute tension du bobinage du transformateur.

5. Transformateur de tension selon la revendication 1 ou l'une quelconque des revendications suivantes,
**caractérisé en ce que**, dans l'évidement (9), sont prévues des pièces de contact (10) disposées à une certaine distance les unes des autres, qui sont en position de contact amovible avec les pièces de contre-contact (11) adaptées du fusible (5).

6. Transformateur de tension selon la revendication 1 ou selon l'une quelconque des revendications suivantes,
**caractérisé en ce que** l'évidement (9) est disposé sur le même axe qu'un élément de connexion (7) conique.

7. Transformateur de tension selon la revendication 6,
**caractérisé en ce que** l'élément de connexion (7) est un élément de fiche faisant saillie par rapport au contour externe du blindage de transformateur (3) métallique, avec un cône d'enfichage (12) se rétrécissant de manière tronconique vers l'extrémité libre, et **en ce que** l'évidement (9) s'étend dans le cône d'enfichage (12) au niveau d'une extrémité.

8. Transformateur de tension selon la revendication 7,
**caractérisé en ce que**, en amont de l'extrémité opposée à l'élément de fiche (7) de l'évidement (9), est disposée une douille conique évasée qui présente une forme de cône, dans laquelle est insérée de manière étanche d'un point de vue électrique une fiche isolante de câble (13) adaptée.

9. Transformateur de tension selon la revendication 6 ou l'une quelconque des revendications suivantes,
**caractérisé en ce que** l'évidement (9) est prolongé axialement vers l'extérieur en passant par l'élément de connexion (7).

10. Transformateur de tension selon la revendication 6 ou 9,
**caractérisé en ce que** l'élément de connexion (7) présente une douille conique interne (16) noyée dans le contour externe du blindage de transformateur (3) métallique, et une alvéole (17) métallique adjacente à son fond, et **en ce que** le fusible (5) s'engrène dans l'alvéole (17) au niveau d'une extrémité.

11. Transformateur de tension selon la revendication 10,
**caractérisé en ce que**, dans le prolongement axial de l'évidement, du côté opposé à la douille conique interne (16), sur le matériau isolant est formée une pièce conique perforée axialement, qui est obturée de manière étanche électriquement par un élément de recouvrement adapté.

12. Transformateur de tension selon la revendication 5 ou selon l'une quelconque des revendications suivantes,
**caractérisé en ce que**, sur les pièces de contact (10) sont apposées des électrodes de commande de champ (18), dont les extrémités libres sont orientées l'une vers l'autre et qui sont noyées dans le matériau isolant (4).

13. Transformateur de tension selon la revendication 5 ou selon l'une quelconque des revendications suivantes,
**caractérisé en ce que**, axialement entre une pièce de contact (10) et la pièce de contre-contact (11) voisine, est inséré un élément élastique de pression (15) électroconducteur.

14. Transformateur de tension selon la revendication 1,
**caractérisé en ce que** le fusible (5) est inséré dans un tuyau protecteur s'étendant sur sa longueur axiale, et **en ce que** les pièces de contact du fusible sont reliées de manière électroconductrice à la bobine haute tension ou à l'élément de connexion.

15. Transformateur de tension selon la revendication 14,
**caractérisé en ce que** l'agencement ainsi formé est coulé directement dans le matériau isolant.

16. Transformateur de tension selon la revendication 14 ou 15, **caractérisé en ce que**, entre le tuyau isolant et le matériau isolant, sont insérées des pièces de rembourrage élastiques.
